# EUROPÄISCHE PATENTANMELDUNG

(11) **EP 1 720 208 A2**
(43) Veröffentlichungstag der Anmeldung: **08.11.2006**
(21) Anmeldenummer: 06001904.9
(22) Anmeldetag: 31.01.2006
(51) Int. Cl.: H01M 2/12, H01M 10/06, H01M 2/36

(54) **Akkumulator und Deckel hierzu**

(30) Priorität: 15.04.2005 DE 102005017442
(71) Anmelder: VB Autobatterie GmbH & Co. KGaA, 30419 Hannover (DE)
(72) Erfinder: Richter, Gerolf Dr., 31139 Hildesheim (DE); Streuer, Peter, 30559 Hannover (DE)
(74) Vertreter: Gerstein, Hans Joachim

(57) **Zusammenfassung**

Ein Akkumulator, insbesondere Bleiakkumulator, mit einem mehrere Zellen aufweisenden Gehäuse, einem das Gehäuse abschließenden Deckel (1) mehrere im Deckel (1) angeordnete, voneinander beabstandete Füllöffnungen (8), die durch mehrere Stopfen (10), von denen wenigstens zwei durch ein flexibles Verbindungselement (11) miteinander verbunden sind, mittels Steckverbindung verschließbar sind, zeichnet sich dadurch aus, das flexible Verbindungselement (11) jeweils so ausgebildet ist, dass der Abstand der miteinander verbundenen Stopfen (10) durch Verdrehen wenigstens eines dieser Stopfen (10) an den Abstand der zugeordneten Füllöffnungen (8) variabel anpassbar ist.

## Beschreibung

Die Erfindung betrifft einen Akkumulator, insbesondere Bleiakkumulator, mit einem mehrere Zellen aufweisenden Gehäuse, einem das Gehäuse abschließenden Deckel, mehrere im Deckel angeordnete, voneinander beabstandete Füll- und Kontrollöffnungen, die durch zugeordnete Stopfen, von denen wenigstens zwei durch ein flexibles Verbindungselement miteinander verbunden sind, mittels Steckverbindung verschließbar sind.

Akkumulatoren sind beispielsweise als Starterbatterien für PKWs bekannt, die aneinander gereihte galvanische Zellen haben. Über jeder Zelle ist in dem Deckel eine Füll- und Kontrollöffnung vorgesehen, durch die der Batterieflüssigkeitsstand kontrolliert und gegebenenfalls nachgefüllt werden kann. Die Öffnungen werden mittels geeigneter Stopfen flüssigkeits- und gasdicht verschlossen.

In der Praxis haben sich Schraub- und Steckstopfen bewährt. Nachteilig ist jedoch, dass sie nur sehr aufwendig verarbeitet werden können. Die Schraubstopfen müssen einzeln in jede Füll- und Kontrollöffnung geschraubt werden, was den Arbeitsaufwand und demzufolge die Herstellungskosten der Akkumulatoren erhöht. Bei den Steckstopfen ist es zwar möglich, mehrere Stopfen miteinander zu verbinden und so in einem Arbeitsschritt mehrere Füll- und Kontrollöffnugen gleichzeitig zu verschlie-ßen. Dies erfordert jedoch eine sehr genaue Justierung der Stopfen über den Füll- und Kontrollöffnungen und Werkzeugausrichtung. Kleinste Fertigungstoleranzen in den Abständen zwischen den Öffnungen oder den verbundenen Stopfen führen zu einem Verkanten einzelner Stopfen und zu Undichtigkeiten. Da Akkumulatoren mit Säure, beispielsweise Schwefelsäure beim Bleiakkumulator, gefüllt sind und explosionsfähige Gasgemische produzieren, führen Undichtigkeiten zu einer Explosionsgefahr und zu erheblichen Gesundheitsgefahren für Personen, die mit den Akkumulatoren zu tun haben. Ein Verkanten der Stopfen lässt sich vermeiden, wenn der Abstand zwischen benachbarten Stopfen flexibel ausgestaltet ist und so an den Abstand der Öffnungen anpassen kann. Eine derartige Stopfenleiste ist in der FR 2 732 513 A1 offenbart. Der Längenausgleich findet jedoch nur longitudinal zu einer die Mittenachsen der Stopfen verbindenden Linie statt und schränkt die Flexibilität beim Einsetzen der Stopfen in die Füllöffnungen ein.

Aufgabe der Erfindung ist es, einen verbesserten Akkumulator zu schaffen, der zudem kostengünstiger gefertigt werden kann.

Die Aufgabe wird mit einem gattungsgemäßen Akkumulator erfindungsgemäß dadurch gelöst, dass durch eine Ausbildung der flexiblen Verbindungselemente der Abstand der miteinander verbundenen Stopfen durch Verdrehen wenigstens eines dieser Stopfen an den Abstand der zugeordneten Füllöffnungen variabel anpassbar ist.

Es wird somit vorgeschlagen, die Füllöffnungen in dem Deckel des Akkumulatorgehäuses nicht einzeln mit Stopfen zu verschließen, nachdem die Batterieflüssigkeit eingefüllt worden ist, sondern mehrere Füllöffnungen in einem Produktionsschritt zu verschließen. Hierzu werden mehrere Stopfen vor dem Verschließen der Füllöffnungen miteinander durch geeignete Verbindungselemente verbunden. Die Verbindung erfolgt in der Weise, dass die Stopfen eine relative Lage zueinander haben, die der Anordnung der zu verschließenden Stopfen entspricht. Auf diese Weise ist es möglich, in einem Produktionsschritt eine Mehrzahl an Stopfen auf den entsprechenden Füllöffnungen zu platzieren und diese zu verschließen.

Um die Füllöffnungen flüssigkeits- und gasdicht zu verschließen, ist es erforderlich, dass die Stopfen passgenau in die zughörigen Füllöffnungen eingesetzt und diese durch geeignete Mittel abgedichtet werden. Haben die Abstände zwischen den miteinander verbundenen Stopfen aufgrund von Fertigungstoleranzen einen geringfügig zu großen oder zu kleinen Abstand voneinander, würden die Stopfen bei einer starren Verbindung beim Einsetzen in die Füllöffnungen verkanten. Hierdurch kann es zum einen zu Beschädigungen an den Stopfen oder Füllöffnungen und damit zu erhöhtem Ausschuss bei der Produktion der Akkumulatoren kommen. Zum anderen besteht die Gefahr, dass die Stopfen die Füllöffnungen nicht ordnungsgemäß verschließen und Akkumulatorflüssigkeit oder Gase aus dem Akkumulator austreten können. Dadurch wird nicht nur die Lebensdauer des Akkumulators verkürzt, sondern es entstehen auch erhebliche Gesundheitsgefahren für Personen, die mit dem Akkumulator in Berührung kommen. Beispielsweise ist ein herkömmlicher Bleiakkumulator mit Schwefelsäure, die zu Verätzungen auf der Haut führen kann, gefüllt.

Um ein Verkannten der Stopfen beim Einsetzen in die Füllöffnungen zu vermeiden, sind die Verbindungen zwischen den Stopfen so ausgestaltet, dass die relativen Abstände zwischen den miteinander verbundenen Stopfen durch Verdrehen wenigstens eines dieser Stopfen um eine zu den Mittenachsen parallele Achse beim Einsetzen variabel sind. Durch relatives Verdrehen der Stopfen zueinander kann deren Abstand sowohl vergrößert als auch verkleinert werden. Auf diese Weise halten die Stopfen beim Einsetzen in die Füllöffnungen immer den richtigen Abstand zueinander ein und können die Füllöffnungen richtig verschließen. Die Drehbewegung der Stopfen erleichtert zusätzlich das Einsetzen der Stopfen in die Füllöffnungen.

Bei dem vorgeschlagenen Akkumulator können also mehrere Öffnungen in einem Produktionsschritt gleichzeitig unter Beibehaltung guter Dichtungseigenschaften verschlossen werden. Dies ermöglicht eine wirtschaftliche und kostengünstige Produktion des Akkumulators.

Auf der Oberfläche des Deckels kann im Bereich der Stopfen mindestens eine Mulde zur bündigen Aufnahme der Stopfen und Verbindungselemente vorgesehen sein.

Zweckmäßig entspricht die Kontur der wenigstens einen Mulde der Kontur der in der Mulde aufzunehmenden Stopfen und Verbindungselemente. Dies ermöglicht eine ebene Oberfläche des Deckels ohne unnötige Kanten.

In einer besonderen Ausführungsform weist das Verbindungselement jeweils zwei Deckplatten der Stopfen verbindende, integral mit den Stopfen geformte Stege auf, wobei die Stege schräg zu einer imaginären, die Mittelachsen der miteinander verbundenen Stopfen schneidenden Fluchtlinie ausgerichtet sind.

Vorzugsweise sind die Füllöffnungen durch die Stopfen flüssigkeits- und gasdicht verschließbar.

Das Abdichten kann dadurch vereinfacht werden, dass sich die Füllöffnungen nach innen verjüngen.

Zweckmäßig ist für jede Zelle eine Füllöffnung vorgesehen.

In einer Ausführungsform hat der Deckel ein auf das Gehäuse aufgesetztes Unterteil und ein im Abstand zum Unterteil angeordnetes und das Unterteil dicht abschließendes Oberteil; zudem ist zwischen dem Unterteil und dem Oberteil ein Kanalsystem zur Säureabscheidung ausgebildet. Zweckmäßig ist das Kanalsystem mit einer Entgasungsöffnung verbunden, die mit einem Zündschutz versehen ist. Die Entgasungsöffnung ist vorzugsweise mit einer Fritte versehen, die auch als Zündschutz ausgebildet sein kann. Vorzugsweise ist die Fritte hydrophobisiert. Dadurch wird verhindert, dass Luftfeuchtigkeit von außen in den Akkumulator gelangt.

Die Aufgabe wird ferner mit einem Akkumulator, insbesondere Bleiakkumulator, mit einem mehrere Zellen aufweisenden Gehäuse, einem das Gehäuse abschließenden Deckel, wobei der Deckel ein auf das Gehäuse aufgesetztes Unterteil und ein im Abstand zum Unterteil angeordnetes und das Unterteil dicht abschließendes Oberteil hat, ein Kanalsystem zur Säureabscheidung zwischen dem Unterteil und dem Oberteil ausgebildet ist, und mehrere im Deckel angeordnete, voneinander beabstandete Füll- und/oder Rücklauföffnungen mit dem Kanalsystem sowie mindestens eine mit einem Zündschutzelement versehene Entgasungsöffnung mit dem Kanalsystem kommunizierend verbunden ist, dadurch gelöst, dass eine an den Deckel integral angelenkte, eine Entgasungsöffnung aufweisende Haltekappe für das Zündschutzelement, die in eine Öffnung des Kanalsystems einklemmbar ist. Durch die an den Deckel angelenkte Haltekappe wird das Anbringen des Zündschutzelementes an den Akkumulator und damit dessen Herstellung vereinfacht. Zudem lässt sich das Zündschutzelement ohne Eingriff in den Akkumulator auswechseln, beispielsweise wenn es beschädigt ist.

Die Aufgabe wird schließlich mit einem gattungsgemäßen Deckel zum Abschließen eines mehrere Zellen aufweisenden Akkumulatorgehäuses mit einem auf das Gehäuse aufgesetzten Unterteil, einem im Abstand zum Unterteil angeordnetes und das Unterteil dicht abschließendes Oberteil sowie mehrere Füllöffnungen, die durch zugeordnete Stopfen, von denen wenigstens zwei durch ein flexibles Verbindungselement miteinander verbunden sind, mittels Steckverbindung verschließbar sind, dadurch gelöst, dass die flexiblen Verbindungselemente so ausgebildet sind, dass der Abstand der miteinander verbundenen Stopfen durch Verdrehen wenigstens eines dieser Stopfen an den Abstand der zugeordneten Füllöffnungen variabel anpassbar ist.

Die Erfindung wird nachfolgend anhand der beigefügten Zeichnungen näher erläutert. Es zeigen:
- Figur 1 -: Draufsicht auf einen Akkumulator;
- Figur 2 -: Schnitt II aus Figur 1;
- Figur 3 -: Hauptansicht einer Steckstopfenleiste;
- Figur 4 -: Draufsicht auf die Steckstopfenleiste aus Figur 3;
- Figur 5 -: Draufsicht auf einen weiteren Akkumulator;
- Figur 6 -: Schnitt VI aus Figur 5;
- Figur 7 -: Teilschnitt VI aus Figur 5;
- Figur 8 -: Schnitt der Entgasungsöffnung aus Figur 7 vor Einsatz eines Flammenschutzfilters;

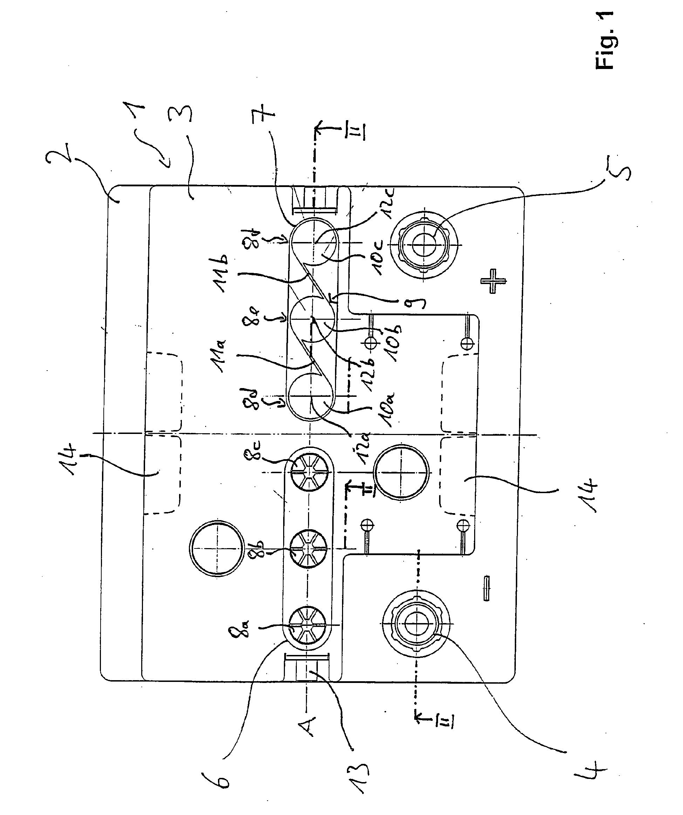

In Figur 1 ist ein Akkumulator dargestellt, der ein Gehäuse aus Kunststoff hat, in dem sechs Zellen in einer Reihe angeordnet sind. Das Gehäuse ist durch einen Deckel 1, der aus einem Unterteil 2 und einem auf dieses aufgesetztem Oberteil 3 besteht, abgeschlossen. Der Akkumulator hat einen Minuspol 4 und einen Pluspol 5. In dem Oberteil 3 des Deckels 1 sind zwei Mulden 6 und 7 mit einem langlochförmigen Querschnitt vorgesehen. Zu jeder Zelle des Akkumulators führt eine Füllöffnung 8a, 8b, 8c, 8d, 8e und 8f. Die Füllöffnungen 8 sind entlang der Längsmittellinie des Deckels A in einer Reihe angeordnet. Drei Füllöffnungen 8a, 8b und 8c sind geöffnet. Die drei Füllöffnungen 8d, 8e und 8e sind mittels der Steckstopfenleiste 9 verschlossen. Die Steckstopfenleiste 9 umfasst die drei Steckstopfen 10a, 10b und 10c. Die Steckstopfen 10a, 10b und 10c sind mittels der Verbindungselemente 11a und 11 b miteinander in einer Reihe verbunden. Die Verbindungselemente 11a und 11 b erstrecken sich jeweils tangential und schräg zu der Linie A zwischen zwei benachbarten Steckstopfen 10a und 10b bzw. 10b und 10c. Durch diese schräg laufende Verbindung können sich die Mitten 12a, 12b und 12c der Steckstopfen 10 beim Einsetzen auf die Füllöffnungen 8d, 8e und 8f relativ zueinander bewegen und einen Mittentoleranzausgleich bewirken, so dass es nicht zu Verkantungen der Steckstopfen 10 in den Füllöffnungen 8d, 8e und 8f kommt.

Die Füllöffnungen 8 sind durch ein Kanalsystem 13, das als Entgasungs- und Säureabschaltungssystem dient, miteinander verbunden. Durch dieses Kanalsystem 13 sind die einzelnen Zellen kommunizierend miteinander verbunden.

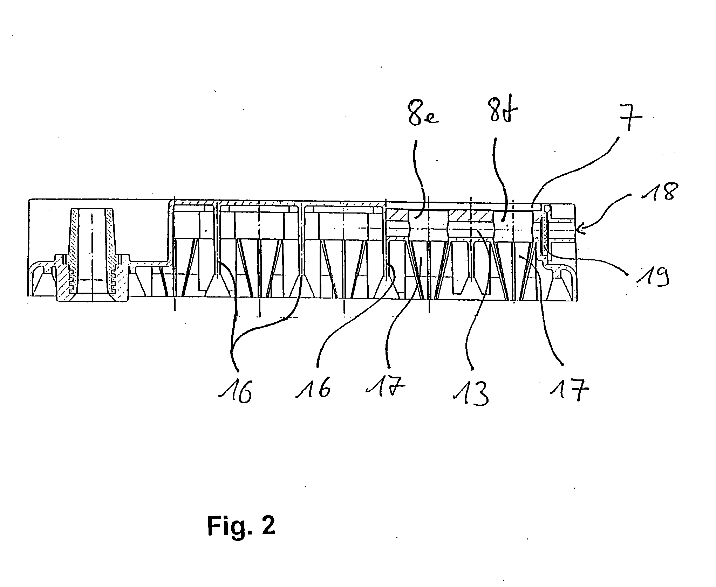

In Figur 2 ist zu erkennen, dass Zellen durch Zelltrennwände 16 flüssigkeitsdicht voneinander getrennt sind. Die in die Zellen führenden Füllöffnungen 8 sind mit einem integrierten Schwappschutz 17 versehen. Das Kanalsystem 13 führt über eine Entgasungsöffnung 18 nach außen. Die Entgasungsöffnung 18 ist mit einer hydrofobisierten Fritte als Flammenschutzfilter versehen.

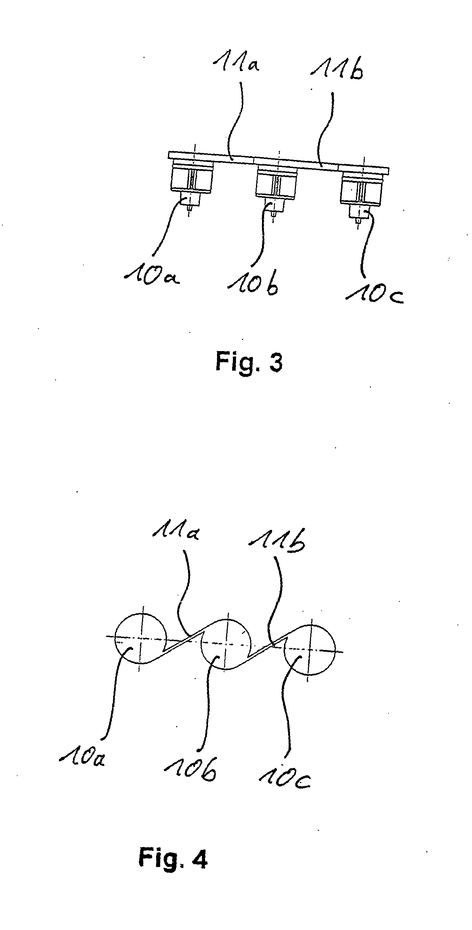

In Figur 3 sind drei Stopfen 10 gezeigt, die durch die Verbindungselemente 11 miteinander verbunden sind. Die Stopfen 10 weisen jeweils einen Stopfenkopf auf. Dieser Stopfenkopf hat eine Höhe, die in etwa der Tiefe der Mulden 6 und 7 entspricht. Auch die Verbindungselemente 11 weisen diese Höhe auf. Hierdurch wird erreicht, dass die Steckstopfenleiste 9 nach dem Einsetzen in die Füllöffnungen 8 in dem Oberteil 3 des Deckels 1 versenkt ist und eine glatte Oberfläche gebildet wird.

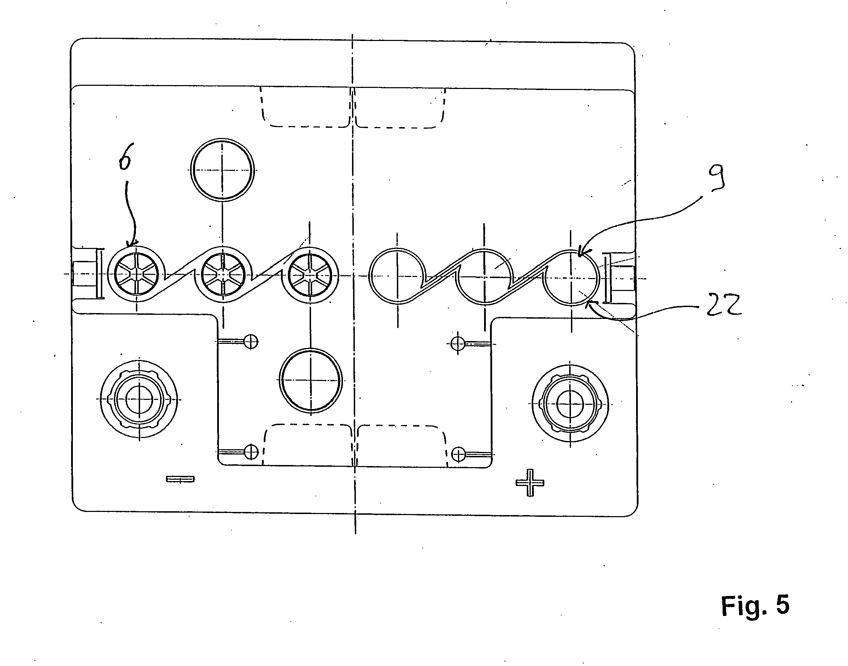

Figur 5 zeigt einen Akkumulator, bei dem die Mulden 21 und 22 in dem Oberteil 3 in der Form dem Umriss der Steckstopfenleiste nachgebildet ist. Hierdurch lässt sich eine noch ebenere Oberfläche des Akkumulators erzielen.

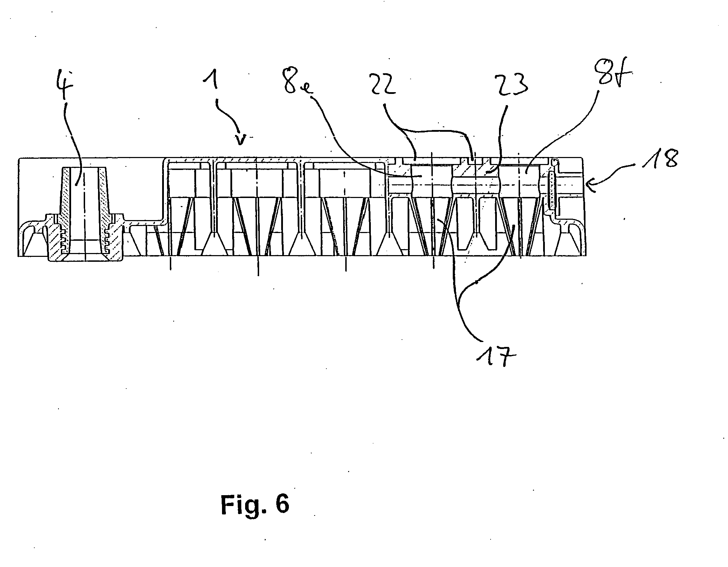

In Figur 6 ist zu erkennen, dass die Füllöffnungen 8 jeweils mit einem Schwappschutz 17 versehen sind. In dem Oberteil 23 des Deckels 1 ist in dem Bereich der Füllöffnungen 8 eine Mulde 22 vorgesehen, deren Kontur der Kontur der in der Mulde aufzunehmenden Stopfenköpfe und Verbindungselemente 11 entspricht. Die Verbindungselemente sind Stege, die schräg zu einer imaginären, die Mittelachsen an den Mitten 12 der miteinander verbundenen Steckstopfen 10 schneidenden Fluchtlinie, ausgerichtet sind.

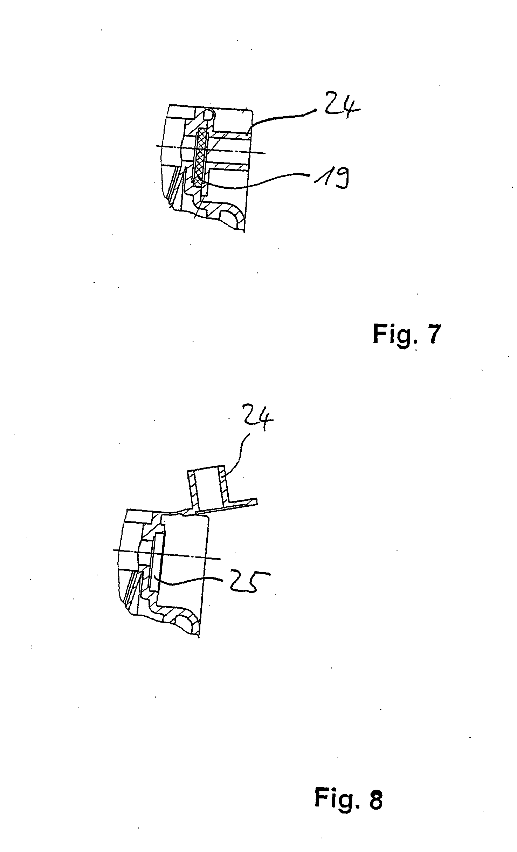

In Figur 7 ist die Entgasungsöffnung 18 mit eingesetztem Zündschutzelement 19 vergrößert dargestellt.

Figur 8 zeigt die Entgasungsöffnung 18 vor dem Einsatz des Zündschutzelementes 19. Um das Einsetzen des Zündschutzelementes 19 zu erleichtern, weist die Entgasungsöffnung 18 eine klappbare Halteklappe 24 auf. Nach Einsatz des Zündschutzelementes 19 in die Filteraufnahme 25 wird die Halteklappe 24 heruntergeklappt und durch geeignete Mittel, wie zum Beispiel verschweißen oder verkleben, verriegelt.

## Patentansprüche

1. Akkumulator, insbesondere Bleiakkumulator, mit einem mehrere Zellen aufweisenden Gehäuse, einem das Gehäuse abschließenden Deckel (1), mehrere im Deckel (1) angeordnete, voneinander beabstandete Füllöffnungen (8), die durch zugeordnete Stopfen (10), von denen wenigstens zwei durch ein flexibles Verbindungselement (11) miteinander verbunden sind, mittels Steckverbindung verschließbar sind, **dadurch gekennzeichnet, dass** das flexible Verbindungselement (11) jeweils so ausgebildet ist, dass der Abstand der miteinander verbundenen Stopfen (10) durch Verdrehen wenigstens eines dieser Stopfen (10) an den Abstand der zugeordneten Füllöffnungen (8) variabel anpassbar ist.

2. Akkumulator nach Anspruch 1, **dadurch gekennzeichnet, dass** auf der Oberseite des Deckels (1) im Bereich der Stopfen mindestens eine Mulde zur bündigen Aufnahme der Stopfen (10) und Verbindungselemente (11) vorgesehen ist.

3. Akkumulator nach Anspruch 2, **dadurch gekennzeichnet, dass** die Kontur der mindestens einen Mulde der Kontur der in der Mulde aufzunehmenden Stopfen (10) und Verbindungselemente (11) entspricht.

4. Akkumulator nach einem der vorstehenden Ansprüche, **dadurch gekennzeichnet, dass** das Verbindungselement (11) jeweils zwei Deckplatten der Stopfen (10) verbindende, integral mit den Stopfen (10) geformte Stege aufweist, wobei die Stege schräg zu einer imaginären, die Mittelachsen der miteinander verbundenen Stopfen (10) schneidenden Fluchtlinie ausgerichtet sind.

5. Akkumulator nach einem der vorstehenden Ansprüche, **dadurch gekennzeichnet, dass** die Füllöffnungen (8) durch die Stopfen (10) flüssigkeits- und gasdicht verschließbar sind.

6. Akkumulator nach einem der vorstehenden Ansprüche, **dadurch gekennzeichnet, dass** sich die Füllöffnungen (8) nach innen verjüngen.

7. Akkumulator nach einem der vorstehenden Ansprüche, **dadurch gekennzeichnet, dass** für jede Zelle eine Füll- und Kontrollöffnung (8) vorgesehen ist.

8. Akkumulator nach einem der vorstehenden Ansprüche, **dadurch gekennzeichnet, dass** der Deckel (1) ein auf das Gehäuse aufgesetztes Unterteil (2) und ein im Abstand zum Unterteil (2) angeordnetes und das Unterteil (2) dicht abschließendes Oberteil (3) hat und ein Kanalsystem (13) zur Säureabscheidung zwischen dem Unterteil (2) und dem Oberteil (3) ausgebildet ist.

9. Akkumulator nach Anspruch 8, **gekennzeichnet durch** mindestens eine mit einem Zündschutz versehene Entgasungsöffnung, die mit dem Kanalsystem (13) verbunden ist, und eine an den Deckel (1) integral angelenkte, eine Entgasungsöffnung aufweisende Haltekappe für den Zündschutz.

10. Akkumulator, insbesondere Bleiakkumulator, mit einem mehrere Zellen aufweisenden Gehäuse, einem das Gehäuse abschließenden Deckel (1), wobei der Deckel (1) ein auf das Gehäuse aufgesetztes Unterteil (2) und ein im Abstand zum Unterteil (2) angeordnetes und das Unterteil (2) dicht abschließendes Oberteil (3) hat, ein Kanalsystem (13) zur Säureabscheidung zwischen dem Unterteil (2) und dem Oberteil (3) ausgebildet ist, und mehrere im Deckel (1) angeordnete, voneinander beabstandete Füll- und/oder Rücklauföffnungen (8) sowie mindestens eine mit einem Zündschutzelement versehene Entgasungsöffnung mit dem Kanalsystem (13) kommunizierend verbunden sind, **gekennzeichnet durch** eine an den Deckel (1) integral angelenkte, eine Entgasungsöffnung aufweisende Haltekappe für das Zündschutzelement, die in eine Öffnung des Kanalsystems (13) einklemmbar ist.

11. Deckel (1) zum Abschließen eines mehrere Zellen aufweisenden Akkumulatorgehäuses mit einem auf das Gehäuse aufgesetzten Unterteil (2), einem im Abstand zum Unterteil (2) angeordnetes und das Unterteil (2) dicht abschließendes Oberteil (3) sowie mehrere Füllöffnungen (8), die durch zugeordnete Stopfen (10), von denen wenigstens zwei durch ein flexibles Verbindungselement (11) miteinander verbunden sind, mittels Steckverbindung verschließbar sind, **dadurch gekennzeichnet, dass** das flexible Verbindungselement (11) so ausgestaltet ist, dass der Abstand der miteinander verbundenen Stopfen (10) durch Verdrehen wenigstens eines dieser Stopfen (10) an den Abstand der zugeordneten Füllöffnungen (8) variabel anpassbar ist.
